# EUROPEAN PATENT APPLICATION

(11) **EP 2 960 841 A1**
(43) Date of publication of application: **30.12.2015**
(21) Application number: 15173121.3
(22) Date of filing: 22.06.2015
(51) Int. Cl.: G06Q 10/06

(54) **INDUSTRIAL AUTOMATION NODE AND METHOD**

(30) Priority: 23.06.2014 US 201462016005 P
(71) Applicant: Rockwell Automation Technologies, Inc., Mayfield Heights, OH 44124 (US)
(72) Inventor: SCHMIRLER, Paul D., Glendale, WI Wisconsin 53217 (US)
(74) Representative: Grünecker Patent- und Rechtsanwälte PartG mbB

(57) **Abstract**

An industrial automation node and method are provided. The industrial automation node in one example includes one or more industrial automation devices configured to generate industrial automation data and a gateway in communication with the one or more industrial automation devices and in communication with a cloud automation facility, with the gateway configured to determine a current configuration of the gateway, request a configuration update from the cloud automation facility, and receive and implement the configuration update from the cloud automation facility.

## Description

### TECHNICAL BACKGROUND

Industrial automation is used to control machines and processes in manufacturing. Automated machines commonly control the handling of components, sub-components, and raw materials, perform fabrication processes, testing, and product handling, packaging, and shipping. Industrial automation enables precise control of industrial processes, achievement of smaller tolerances and better quality products, higher production outputs, and increased worker safety and productivity.

Industrial automation installations comprise multiple computerized devices that control industrial machines and industrial processes. The components of an industrial automation installation must work together in a coordinated fashion, performing operations such as exchanging data, controlling the timing and scheduling of processes, providing information to operators or technicians, and receiving operator inputs.

Because of the large number of system variables that must be monitored and controlled, industrial automation systems often generate vast amounts of data. In addition to production statistics, data relating to machine health, alarm status, operator feedback, electrical or mechanical load, and the like are often monitored. The data is generated by the many industrial devices that can make up a given automation system, including industrial controllers and associated I/O, telemetry devices, motion control devices, valves, conveyors, raw material handling systems, product handling systems, visualization applications, traceability systems, and the like. Moreover, such industrial facilities can operate on a twenty-four hour basis, wherein automation systems can generate a vast amount of data.

In addition, industrial automation monitoring has evolved from monitoring devices in an industrial plant to include monitoring devices at remote sites, such as mobile or temporary facilities. Industrial automation monitoring can be used for drilling, mining, and other resource extraction operations. Industrial automation monitoring can be used in monitoring water treatment facilities or in monitoring of environmental conditions. Industrial automation monitoring can be used to monitor the health and operation of industrial automation devices including field equipment.

Industrial automation devices can generate industrial automation data at multiple, geographically disparate locations. The industrial automation data can be collected via the cloud, wherein industrial automation data can be accumulated and made available to a user or users via the cloud. Where the industrial automation devices are distributed geographically, the cloud advantageously provides a facility for accessing data from multiple, distributed industrial automation devices.

### OVERVIEW

An industrial automation node and method are provided. The industrial automation node in one example includes one or more industrial automation devices configured to generate industrial automation data and a gateway in communication with the one or more industrial automation devices and in communication with a cloud automation facility, with the gateway configured to determine a current configuration of the gateway, request a configuration update from the cloud automation facility, and receive and implement the configuration update from the cloud automation facility.

This Overview is provided to introduce a selection of concepts in a simplified form that are further described below in the Technical Disclosure. It should be understood that this Overview is not intended to identify key features or essential features of the claimed subject matter, nor is it intended to be used to limit the scope of the claimed subject matter.

### BRIEF DESCRIPTION OF THE DRAWINGS

Figure 1 shows an exemplary industrial automation node.
Figure 2 shows an exemplary data flow diagram for the industrial automation node.
Figure 3 shows a flowchart of an industrial automation method.
Figure 4 shows an exemplary industrial automation node in another example.
Figure 5 shows a flowchart of an industrial automation method in another example.
Figure 6 shows detail of an exemplary industrial automation node.

### DETAILED DESCRIPTION

The following description and associated drawings teach the best mode of the invention. For the purpose of teaching inventive principles, some conventional aspects of the best mode may be simplified or omitted. The following claims specify the scope of the invention. Some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by claims and their equivalents.

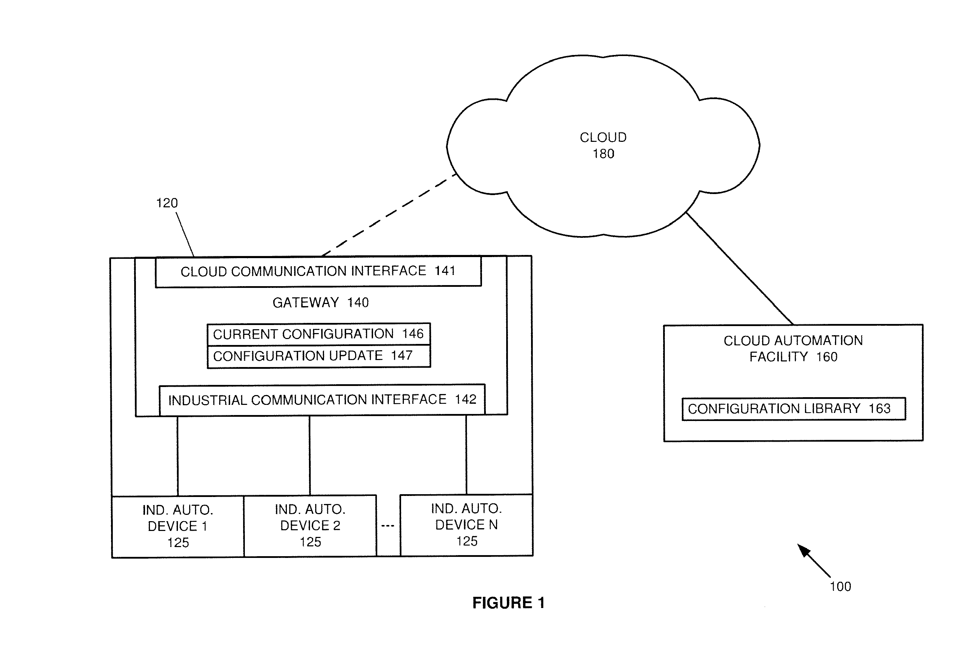

Figure 1 shows an exemplary industrial automation node 120. The industrial automation node 120 is part of an industrial automation system 100, with the industrial automation system 100 further including a cloud 180 and a cloud automation facility 160. The industrial automation node 120 is in communication with the cloud 180. The industrial automation node 120 communicates continuously, periodically, or intermittently with the cloud 180. The industrial automation node 120 communicates with the cloud 180 via a wired or wireless communication channel. The industrial automation node 120 in some examples communicates with the cloud 180 via a cellular communication link and exchanges communications with the cloud 180 via a cellular telephone communication protocol. In such an example, the industrial automation node 120 has an account with a cellular provider.

The industrial automation node 120 in some examples is located in a manufacturing plant or other industrial facility. Alternatively, in other examples the industrial automation node 120 is remotely located and comprises a small facility, a temporary facility, a mobile facility, or other self-contained facility. In other examples, the industrial automation node 120 is substantially stationary or is fixed in location.

The industrial automation node 120 performs some manner of industrial automation operation or operations. The industrial automation node 120 generates and/or gathers industrial automation data. The industrial automation data can include timestamps that indicate when data portions were generated or collected. The industrial automation node 120 transfers the industrial automation data to the cloud 180 for storage, analysis, and other uses. The industrial automation node 120 further transfers operational information to the cloud 180 in some examples, including operational status and operational characteristic. The industrial automation node 120 in some examples receives information from the cloud 180, including programming, measurement values or other information needed for operation of the industrial automation node 120, requests for operational status and operational characteristics from the industrial automation node 120, and other information.

The industrial automation node 120 relays industrial automation data to the cloud automation facility 160. The industrial automation node 120 accumulates and relays industrial automation data to the cloud automation facility 160. The industrial automation node 120 processes and relays industrial automation data to the cloud automation facility 160. The industrial automation node 120 filters and relays industrial automation data to the cloud automation facility 160. The industrial automation node 120 compresses and relays industrial automation data to the cloud automation facility 160. In addition, the industrial automation node 120 periodically transfers a heartbeat message to the cloud automation facility 160.

The cloud 180 comprises a network or association of connected computer devices and digital electronic resources that can be used to perform processing and to relay communications. The term "cloud" is a shorthand reference to cloud computing infrastructure. The cloud includes one or more communication networks, such as the Internet, for example, and can further include portions of an industrial communications network, such as a local area network (LAN) or a wide area network (WAN). In cloud computing, a computing process may run on one or many connected cloud computers at the same time. In cloud computing, the cloud can host and run an application anywhere in the world. Further, the cloud 180 enables access to the application from anywhere.

The cloud 180 includes one or more data storage facilities for storing received industrial automation data in some examples. The cloud 180 receives industrial automation data from the industrial automation node 120 and accumulates and stores the industrial automation data. The cloud 180 in some examples processes and/or analyzes the industrial automation data.

The cloud automation facility 160 is configured to communicate with the industrial automation node 120 via the cloud 180 and provide cloud services to the industrial automation node 120. Cloud services can include, but are not limited to, data storage, data analysis, control applications, visualization applications such as cloud-based Human-Machine Interfaces (HMIs), reporting applications, Enterprise Resource Planning (ERP) applications, notification services, or other such applications.

The cloud automation facility 160 is configured to obtain industrial automation data of the industrial automation node 120 via the cloud 180. In addition, the cloud automation facility 160 stores and provides configuration information to the industrial automation node 120. The cloud automation facility 160 includes a configuration library 163 that stores configuration information for one or more industrial automation nodes 120. The configuration library 163 is used to configure industrial automation nodes 120. The configuration library 163 can be used to configure a large variety of industrial automation devices 125. The configuration library 163 in some examples stores configuration information for each industrial automation device 125 of the industrial automation node 120. Alternatively, in other examples the configuration library 163 stores configuration information for all possible industrial automation devices 125 that could be used by the industrial automation node 120. The configuration library 163 stores multiple versions of each configuration information item in some examples. The configuration library 163 receives updates of configuration information and provides the updated configuration information to industrial automation nodes 120.

The industrial automation node 120 in the example shown includes one or more industrial automation devices 125 and a gateway 140 coupled to the one or more industrial automation devices 125. The one or more industrial automation devices 125 perform industrial automation operations. The one or more industrial automation devices 125 can be selected and included in the industrial automation node 120 to perform specific automation tasks.

The industrial automation node 120 interacts with cloud-based computing services that are hosted by the cloud 180. The cloud platform comprises infrastructure that allows shared computing services to be accessed and utilized by cloud-capable devices. The cloud platform can be a public cloud that is accessible via the Internet by devices having Internet connectivity and appropriate authorizations to utilize commercially-available communication services. In some examples, access to the cloud platform and associated services can be provided to customers as subscription services.

Providing the one or more industrial automation devices 125 with cloud capability can offer a number of advantages. Cloud-based storage can be easily scaled to accommodate the large quantities of data that can be generated daily by an industrial automation enterprise. Moreover, multiple industrial automation facilities at different geographical locations can migrate their respective automation data to the cloud 180 for aggregation, collation, collective analysis, and enterprise-level reporting without the need to establish a private network between the facilities.

Cloud-based diagnostic applications can monitor the health of respective automation systems or their associated industrial devices across an entire plant, or across multiple industrial automation facilities. Cloud-based control applications can be used to track a unit of product (or a unit or units of raw materials) through stages of production, collecting data for each unit at each stage.

The industrial automation node 120 can accept a number of and variety of industrial automation devices 125. The one or more industrial automation devices 125 can be installed to and removed from the industrial automation node 120 in some examples. The one or more industrial automation devices 125 in some examples comprise batch control systems, continuous control systems, or discrete control systems. The one or more industrial automation devices 125 can include devices such as industrial controllers (e.g., programmable logic controllers or other types of programmable automation controllers), field devices such as sensors, meters, valves, motor drives, actuators, HMIs, industrial robots, barcode markers and readers, vision system devices, welders, or other such industrial devices.

The gateway 140 includes a cloud communication interface 141 and an industrial communication interface 142. The cloud communication interface 141 is configured to communicate with the cloud 180. The industrial communication interface 142 is configured to communicate with the one or more industrial automation devices 125.

The industrial communication interface 142 facilitates monitoring and control of a process or processes. The industrial communication interface 142 exchanges data with the one or more industrial automation devices 125 using a communication system such as native hardwired I/O or via a plant network such as Ethernet/IP, Data Highway Plus, ControlNet, Devicenet, or the like. The industrial communication interface 142 typically receives any combination of digital or analog signals from the one or more industrial automation devices 125 indicating a current state of the one or more industrial automation devices 125 and associated processes.

The cloud communication interface 141 comprises a communication interface that exchanges communications with the cloud 180. The cloud communication interface 141 uses any suitable communication protocol. The cloud communication interface 141 performs wired and/or wireless communications with the cloud 180, as needed. The cloud communication interface 141 can employ one or more different types of communications modules to connect with mobile-phone carriers, Wi-Fi providers, and other communications-services providers from locations in which wireless service can be obtained. The cloud communication interface 141 in some examples performs wireless communications with the cloud 180 using a cellular communications protocol, including cellular communications protocols such as 2G (second generation)/CDMA, 3G/LTE, 4G, 5G, or any other suitable cellular telephone communication protocol. Alternatively, the cloud communication interface 141 uses other suitable wireless communication protocols. By employing the cloud communication interface 141, cloud-computing services can be extended into many different, geographically dispersed areas and to a variety of technologies and uses for which traditional wireless-service subscriptions would not be economically feasible.

The gateway 140 can transfer substantially real-time industrial automation data to the cloud 180. However, if the gateway 140 determines that communications are not possible, or if the gateway 140 determines that it is not time for an industrial automation data upload, the gateway 140 can transfer bulk industrial automation data to the cloud 180. In such a situation, the gateway 140 enters a store-and-forward mode, wherein the industrial automation node 120 accumulates industrial automation data and transfers the accumulated industrial automation data to the cloud 180 at predetermined time periods.

The gateway 140 in some examples includes multiple communication ports. The gateway 140 in some examples includes wired and wireless communication ports. Consequently, the gateway 140 may be able to communicate with the cloud 180 in various ways and using more than one communication protocol or scheme.

In some examples, the gateway 140 provides security. The gateway 140 can provide access control, screening or limiting communications. The gateway 140 can encrypt the industrial automation data being transferred to the cloud 180.

The gateway 140 in some examples is a small footprint device, such as the netbiter^{™} remote communication gateway, available from HMS Industrial Networks. The netbiter^{™} remote communication gateway includes GSM/GPRS cellular communication capability and includes Ethernet wired communication capability. The gateway 140 in some examples has a small physical size, uses a low amount of electrical energy, performs as little processing or communicating as needed, adds minimal latency to data transfers or operations in the industrial automation node 120, or a combination of these factors, for example.

The gateway 140 comprises a fixed hardware and software in some examples. Alternatively, the gateway 140 comprises a communication card or other communication device that can be installed into and removed from the industrial automation node 120. Corresponding gateway software can be obtained by the industrial automation node 120 for a current gateway device or for a current gateway device format/protocol.

In some examples, the software for the gateway 140 is configurable, such as by the cloud 180 or by the cloud automation facility 160. Further, the gateway software can be dynamically updated or modified.

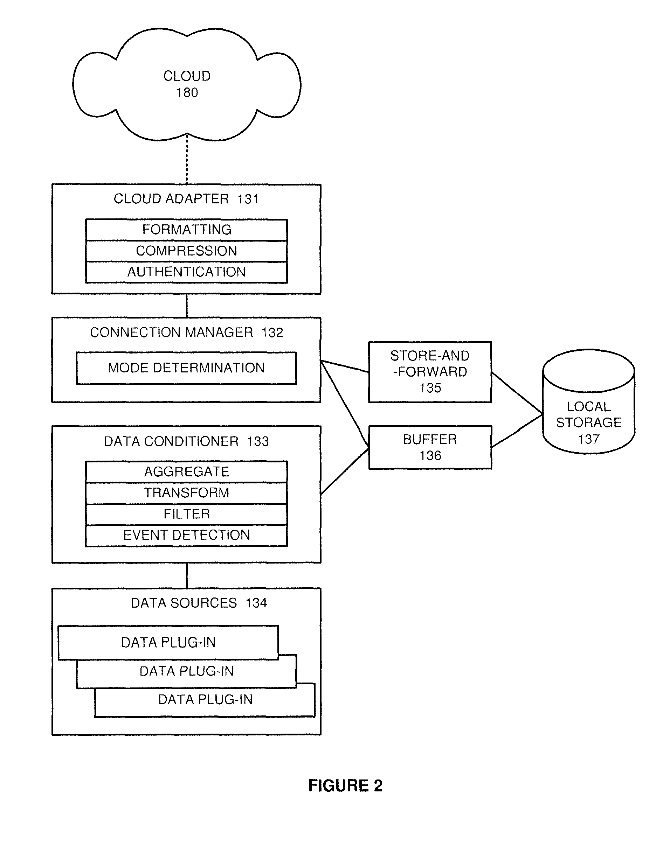

The gateway 140 obtains and loads suitable data plug-ins for the one or more industrial automation devices 125 (see Figure 2). The data plug-ins comprises plug-ins for receiving industrial automation data from the one or more industrial automation devices 125. The gateway 140 may acquire a data plug-in or plug-ins for each industrial automation device 125. The data plug-ins operate to receive the industrial automation data in a format of the corresponding industrial automation device 125. The data plug-ins can process or condition the industrial automation data. The data plug-ins can transform the industrial automation data. Other uses for the data plug-ins are contemplated and are within the scope of the description and claims. However, the data plug-ins do not generate the industrial automation data.

The gateway 140 in some examples stores a set, subset, or sets of plug-ins that are anticipated to be needed in the industrial automation node 120. The gateway 140 may store more plug-ins than needed, including plug-ins that may be needed for future devices or future operations. Alternatively, in other examples, the gateway 140 obtains and installs only the needed data plug-ins, wherein unneeded data plug-ins are not present in the industrial automation node 120.

The gateway 140 in some examples includes configuration information in messages or data that is sent to the cloud 180. Further, the cloud 180 (or the cloud automation facility 160) in some examples sends available configuration version information to the gateway 140. As a result, the gateway 140 can determine that a newer configuration version is available and can subsequently request the newer configuration version from the cloud 180 or from the cloud automation facility 160.

In some examples, the gateway 140 is configured to request a configuration update from the cloud 180 or the cloud automation facility 160, with the request including information including a current configuration 146 (and can include other information such as information about the one or more installed industrial automation devices 125), receive a configuration update in response, if a configuration update is needed or warranted, and implement the received configuration update.

In some examples, the industrial automation node 120 comprises one or more industrial automation devices 125 configured to generate industrial automation and a gateway 140 in communication with the one or more industrial automation devices 125 and in communication with a cloud automation facility 160, with the gateway 140 configured to determine a current configuration 146 of the gateway 140, transfer the current configuration 146 to the cloud automation facility 160, and receive and implement a configuration update 147 from the cloud automation facility 160. In some examples, the industrial automation node 120 performs a configuration update without any operator inputs.

In some examples, the configuration information comprises communication parameters, data collection parameters, and data conditioning parameters. The communication parameters define communications characteristics for the industrial automation node 120, such as communication times/intervals, communication types/protocols, a number of stored messages per upload package, a maximum upload frequency and/or bandwidth limits, and a size or time limit for storing industrial automation data in a disconnected state, for example. The data collection parameters define data collection parameters for the one or more industrial automation devices 125 of the industrial automation node 120, such as data to be collected and tags or alarms to be collected from specific industrial automation devices 125, and how often data is to be collected, for example. The data conditioning parameters define data conditioning operations to be performed, such as filtering, compression, transformation, etc. It should be understood that additional communication parameters, data collection parameters, and data conditioning parameters are contemplated and are within the scope of the description and claims.

Figure 2 shows an exemplary data flow diagram for the industrial automation node 120. In this example, the industrial automation node 120 includes a cloud adapter 131, a connection manager 132, a data conditioner 133, one or more data sources 134, a store-and-forward module 135, a buffer 136, and a local storage 137. The cloud adapter 131, connection manager 132, data conditioner 133, one or more data sources 134, store-and-forward module 135, buffer 136, and local storage 137 in some examples comprise elements of the gateway 140.

In operation, the one or more data sources 134 generate the industrial automation data. The one or more data sources 134 comprise one or more data plug-ins for the one or more industrial automation devices 125 in the example shown. The data conditioner 133 receives the industrial automation data from the one or more data sources 134. The data conditioner 133 performs data conditioning operations on the industrial automation data, such as data aggregation, data filtering, data event detection, and/or data transformation, for example. The data conditioner 133 then transfers the conditioned industrial automation data to the buffer 136. The buffer 136 can subsequently transfer the industrial automation data to either the local storage 137 or the connection manager 132, depending on whether the gateway 140 is in a store-and-forward mode. The connection manager 132 determines if the gateway 140 is or is not in a store-and-forward mode. The gateway 140 can be in a store-and-forward mode if communication is currently not possible with the cloud 180, if the gateway 140 is programmed to only transfer data to the cloud 180 at predetermined time periods, or depending on other or additional conditions or rules. If the gateway 140 is in a store-and-forward mode, the connection manager 132 directs the store-and-forward module 135 to create an upload package having predetermined characteristics, wherein the connection manager 132 transfers an upload package from the store-and-forward module 135 to the cloud 180. If the gateway 140 is not in a store-and-forward mode, the connection manager 132 either obtains industrial automation data from the buffer 136 or from the local storage 137 via the buffer 136. The cloud adapter 131 interacts with the connection manager 132 to exchange communications with the cloud 180. The cloud adapter 131 in some examples performs communications authentication as a prerequisite to exchanging communications with the cloud 180. The cloud adapter 131 in some examples performs data compression on the industrial automation data prior to transferring the industrial automation data to the cloud 180. The cloud adapter 131 in some examples performs formatting of the industrial automation data prior to transferring the industrial automation data to the cloud 180.

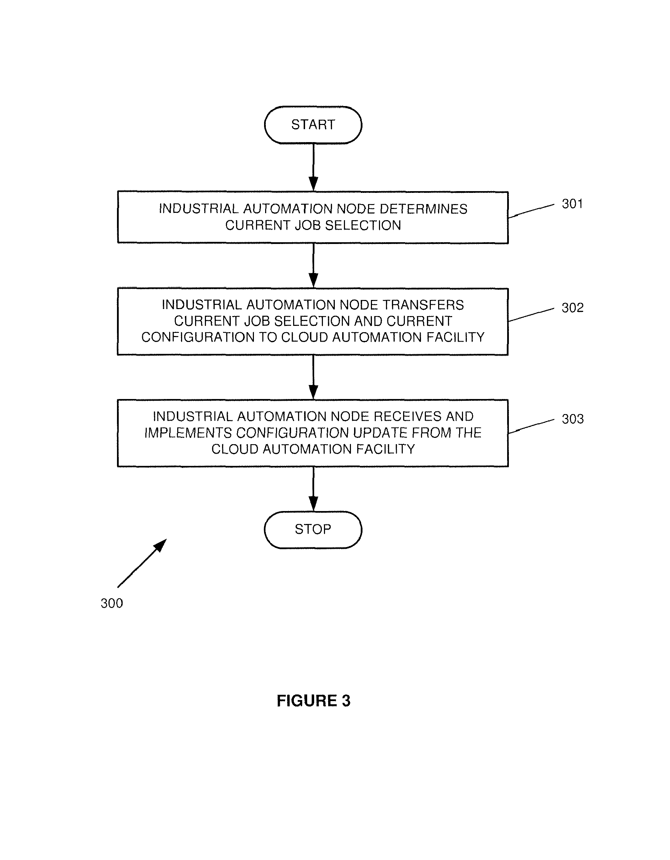

Figure 3 shows a flowchart 300 of an industrial automation method. The industrial automation method in some examples is performed by an industrial automation node.

In step 301, the industrial automation node determines a current job selection for the industrial automation node. The current job selection may be as a result of an operator's selection. The current job selection may be the result of programming. The current job selection in yet other examples flows from a previously-completed job or sequence of jobs to be performed.

In step 302, the industrial automation node transfers the current job selection and a current configuration to a cloud automation facility. The current job selection and the current configuration are transferred in order to verify a correct configuration for the industrial automation node and for the current job selection. The industrial automation node uses the current job selection to obtain a current configuration of the industrial automation node (or a relevant industrial automation device or devices).

In step 303, the industrial automation node receives a configuration update from the cloud automation facility in response. The configuration update is conditional and may or may not be received. The configuration update is received if needed, such as where the industrial automation node is employing an old or outdated configuration (or a portion of an old or outdated configuration). The cloud automation facility sends the configuration update based on the current job selection and the current configuration sent to the cloud automation facility by the industrial automation node. The cloud automation facility sends the configuration update to the industrial automation node if the cloud automation facility determines that the current configuration of the industrial automation node is old, outdated, incorrect, or less than optimal, for example.

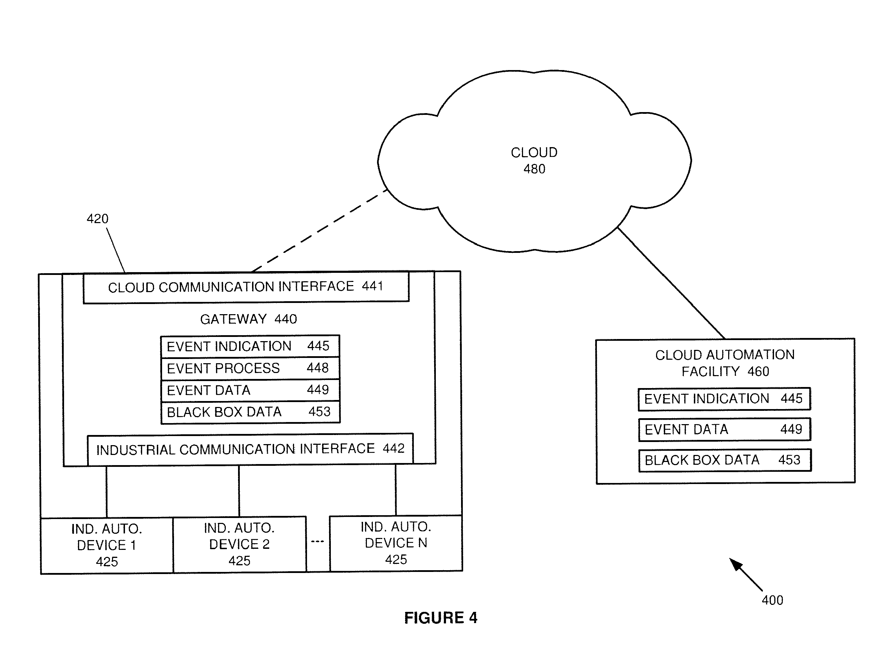

Figure 4 shows an exemplary industrial automation node 420 in another example. The industrial automation node 420 can be the same as the industrial automation node 120 of Figure 1 or can be different. As before, the industrial automation node 420 is part of an industrial automation system 400, with the industrial automation system 400 further including a cloud 480 and a cloud automation facility 460. The industrial automation node 420 includes one or more industrial automation devices 425 and a gateway 440 coupled to the one or more industrial automation devices 425. The gateway 440 includes a cloud communication interface 441 that exchanges communications with the cloud 480 and an industrial communication interface 442 that exchanges communications with the one or more industrial automation devices 425.

In addition to operations discussed for the gateway 120, the gateway 440 detects and stores an event indication 445 in the industrial automation data received from at least one industrial automation device 425 of the one or more industrial automation devices 425. The event indication 445 comprises any manner of indication, such as an event flag, event variable, event state, event message, or other indication. The event indication indicates that an event (including an abnormal or undesired condition or operation) has occurred, and may still be occurring. Consequently, it may be desirable for the industrial automation node to capture additional data. The gateway 440 then selects an event process 448 based on the event indication 445. The event process 448 can be already stored in the industrial automation node 420 in some examples. Alternatively, the gateway 440 can obtain the event process 448 from an external source such as from the cloud 480 or from the cloud automation facility 460, for example. The gateway 440 executes the event process 448 and generates the event data 449. The event data 449 comprises or includes data not already included in the industrial automation data. The event data includes data intended to assist in analyzing the event and in determining an event type and/or an event cause. The industrial automation node 420 transfers the event indication 445 and the event data 449 to the cloud 480 and/or the cloud automation facility 460. The cloud automation facility 460 in some examples processes and analyzes the event indication 445 and the event data 449 to determine an event type and an event cause. In addition, other determinations can be made from the event indication 445 and/or the event data 449.

In some examples, the industrial automation node 120 performs event monitoring without any operator inputs.

In some examples, the industrial automation node 420 is further configured to obtain black box data 453 of the at least one industrial automation device 425 and transfer the black box data 453 to the cloud automation facility 460 along with the event indication 445 and the event data 449. The black box data 453 comprises recorded operational data about the industrial automation device 425 and can be used in conjunction with the event indication 445 and the event data 449 for event monitoring. The black box data 453 can be used in conjunction with the event indication 445 and the event data 449 for processing and analyzing the event and determining characteristics of the event.

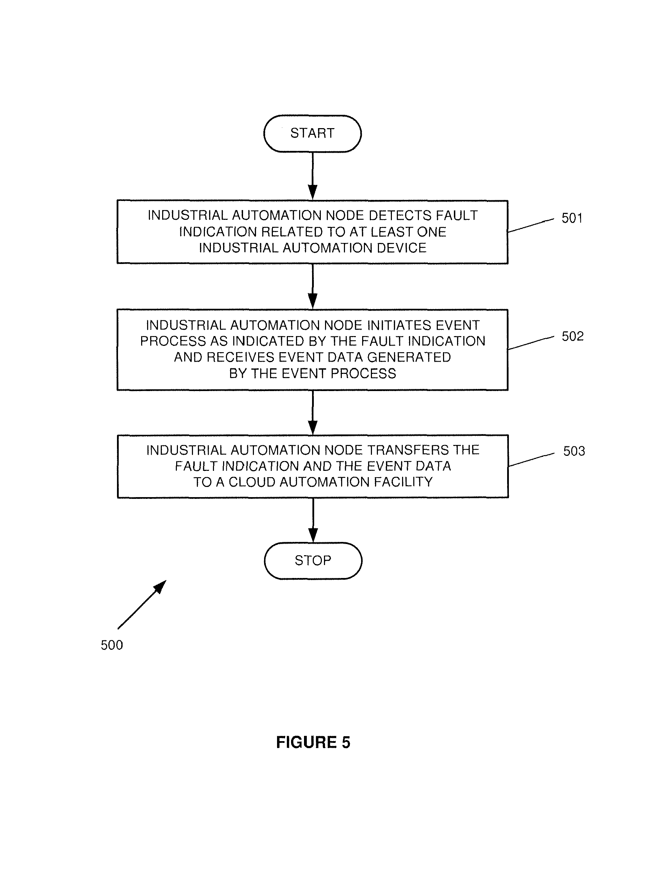

Figure 5 shows a flowchart 500 of an industrial automation method in another example. The industrial automation method in some examples is performed by an industrial automation node.

In step 501, the industrial automation node detects an event indication related to at least one industrial automation device of the industrial automation node. It should be understood, however, that an event indication may be related to multiple industrial automation devices of the industrial automation node. The event indication can comprise any manner of indication, such as an event flag, event variable, event state, event message, or other indication. The event indication indicates that an event (including an abnormal or undesired condition or operation) has occurred, and may still be occurring. Consequently, it is desirable for the industrial automation node to capture additional data.

In step 502, the industrial automation node initiates an event process, as indicated by the event indication. The industrial automation node selects the event process according to the event indication. The event process is then executed by the industrial automation node, wherein the event process generates the event data. The event data can comprise or include data not already included in the industrial automation data. The event data can include data intended to assist in analyzing the event and in determining an event type and/or an event cause. As a result, the industrial automation node receives event data generated by the event process.

In step 503, the industrial automation node transfers the event indication and the event data to a cloud automation facility. The event data can be transferred to the cloud automation facility substantially as it is obtained, or can be accumulated by the industrial automation node and then relayed to the cloud automation facility. The event indication and the event data can be processed and analyzed by the cloud automation facility. The cloud automation facility determines characteristics of the event, potentially including an event type and an event cause, for example. The cloud automation facility can subsequently take action based on the determination.

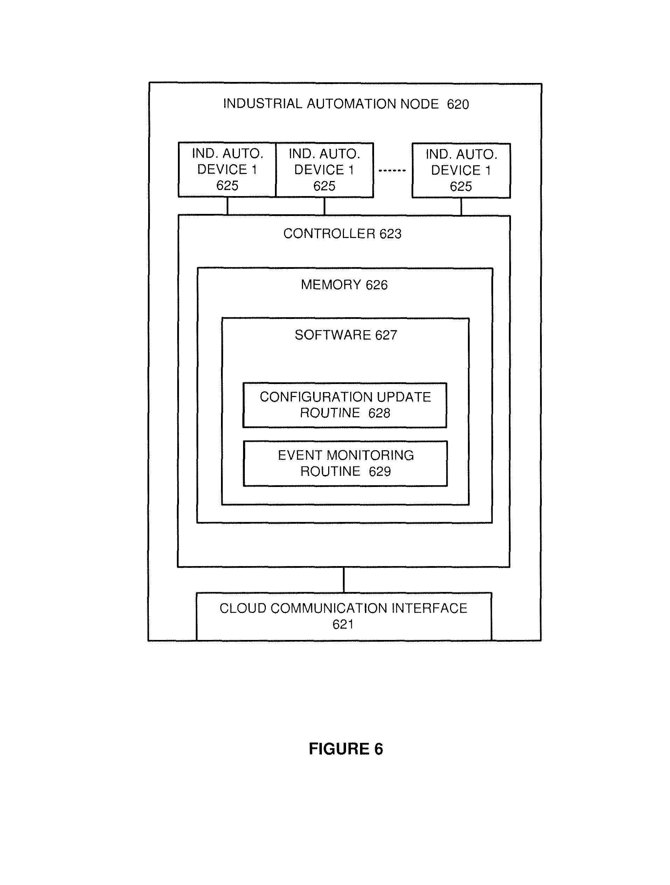

Figure 6 shows detail of an exemplary industrial automation node 620. The industrial automation node 620 includes a cloud communication interface 621, an industrial communication interface 622, one or more industrial automation devices 625, a controller 623 coupled to the cloud communication interface 621 and to the one or more industrial automation devices 625, and a memory 626 coupled to the controller 623. The memory 626 can be separate from or included in the controller 623.

The memory 626 in the example shown includes software 627. In some examples, the software 627 comprises operating instructions that configure the controller 623, when executed by the industrial automation node 620 in general or the controller 623 in particular, to direct the controller 623 to perform industrial automation node operations. Other data, such as operational data, may also be stored in the memory 626. The software 627 in one example comprises at least a configuration update routine 628 and an event monitoring routine 629. The configuration update routine 628 performs configuration updates of the industrial automation node 620 in some examples. The event monitoring routine 629 performs event monitoring in the industrial automation node 620 in some examples.

The controller 623 may comprise a microprocessor and other circuitry that retrieves and executes the software 627 from the memory 626. The controller 623 may be implemented within a single processing device, but may also be distributed across multiple processing devices or sub-systems that cooperate in executing program instructions. Examples of the controller 623 include general purpose central processing units, application specific processors, and logic devices, as well as any other type of processing device, combinations, or variations.

The memory 626 may comprise any computer readable storage media readable by the controller 623 and capable of storing the software 627. The memory 626 may include volatile and nonvolatile, removable and non-removable media implemented in any method or technology for storage of information, such as computer readable instructions, data structures, program modules, or other data. The memory 626 may be independent from or integrated into the controller 623. The memory 626 can comprise additional elements, such as a memory controller, capable of communicating with the controller 623. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the storage media a propagated signal.

In addition to storage media, in some implementations the memory 626 may also include communication media over which the software 627 may be communicated internally or externally. The memory 626 may be implemented as a single storage device but may also be implemented across multiple storage devices or sub-systems co-located or distributed relative to each other. The memory 626 may comprise additional elements capable of communicating with the controller 623 or possibly other systems.

The software 627 may be implemented in program instructions and among other functions and may, when executed by the controller 623, direct the controller 623 to operate as described herein. In particular, the program instructions may include various components or modules that cooperate or otherwise interact to implement at least a portion of the industrial automation node 620. The various components or modules may be embodied in compiled or interpreted instructions or in some other variation or combination of instructions. The various components or modules may be executed in a synchronous or asynchronous manner, in a serial or in parallel, in a single threaded environment or multi-threaded, or in accordance with any other suitable execution paradigm, variation, or combination thereof. The software 627 in the examples comprises computer programs, firmware, or some other form of machine-readable processing instructions. The software 627 may include an operating system, utilities, drivers, network interfaces, applications, virtual machines, or some other type of software. The software 627 may include additional processes, programs, or components, such as operating system software or other application software. The software 627 may also comprise firmware or some other form of machine-readable processing instructions executable by the controller 623.

In general, the software 627, when loaded into the controller 623 and executed, may transform a suitable apparatus, system, or device from a general-purpose computing system into a special-purpose computing system customized to perform a configuration update or perform event monitoring, among other operations. Indeed, encoding the software 627 on the memory 626 may transform the physical structure of the memory 626. The specific transformation of the physical structure may depend on various factors in different implementations of this description. Examples of such factors may include, but are not limited to the technology used to implement the storage media of the memory 626 and whether the computer-storage media are characterized as primary or secondary storage, as well as other factors.

The cloud communication interface 621 may include communication connections and devices that allow for communication with other computing systems over a communication network or collection of networks. The cloud communication interface 621 may include user input and output devices for being controlled by a user.

The cloud communication interface 621 comprises a network card, network interface, port, or interface circuitry that allows the industrial automation node 620 to communicate over a network or networks. The cloud communication interface 621 may also include a memory device, software, processing circuitry, or some other device. The cloud communication interface 621 can use any suitable communication protocol to exchange communications.

The cloud communication interface 621 may include components that communicate over communication links, such as network cards, ports, RF transceivers, processing circuitry and software, or other communication components. The cloud communication interface 621 may be configured to communicate over electrically conductive, wireless, optical, or other links.

The cloud communication interface 621 can further include components that interact with a user to receive user inputs and user communications and to present media and/or information. These components typically include a keyboard, display, indicator lights, speakers, touch pads, microphone, buttons, mouse, or other user input/output apparatus, including combinations thereof.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. An industrial automation node, comprising:
one or more industrial automation devices configured to generate industrial automation data; and
a gateway in communication with the one or more industrial automation devices and in communication with a cloud automation facility, with the gateway configured to determine a current configuration of the gateway, request a configuration update from the cloud automation facility, and receive and implement the configuration update from the cloud automation facility.

2. The industrial automation node of claim 1, with the gateway including an industrial communication interface and a cloud communication interface comprising a wired communication interface.

3. The industrial automation node of claim 1, with the gateway including an industrial communication interface and a cloud communication interface comprising a wireless communication interface.

4. The industrial automation node of claim 1, with the configuration update comprising one or more of communication parameters, data collection parameters, or data conditioning parameters.

5. The industrial automation node of claim 1, with the one or more industrial automation devices generating or collecting industrial automation data relating to an industrial automation event, activity, or process.

6. The industrial automation node of claim 1, with the gateway transforming the industrial automation data into refined industrial automation data for storage, analysis, or processing by the cloud automation facility.

7. The industrial automation node of claim 1, with the gateway further configured to detect an event indication related to at least one industrial automation device of one or more industrial automation devices of the industrial automation node, initiate an event process in the industrial automation node as indicated by the event indication and receive event data generated by the event process, and transfer the event indication and the event data to the cloud automation facility for event monitoring.

8. The industrial automation node of claim 7, with the gateway further configured to transfer black box data of the at least one industrial automation device to the cloud automation facility.

9. An industrial automation method, comprising:
in a gateway of an industrial automation node, determining a current configuration of the gateway;
in the gateway, requesting a configuration update from the gateway to a cloud automation facility; and
in the gateway, receiving the configuration update from the cloud automation facility and implementing the configuration update.

10. The industrial automation method of claim 9, with the configuration update comprising one or more of communication parameters, data collection parameters, or data conditioning parameters.

11. The industrial automation method of claim 9, with the one or more industrial automation devices generating or collecting industrial automation data relating to an industrial automation event, activity, or process.

12. The industrial automation method of claim 9, further comprising the gateway transforming the industrial automation data into refined industrial automation data for storage, analysis, or processing by the cloud automation facility.

13. The industrial automation method of claim 9, further comprising:
in the gateway, detecting an event indication related to at least one industrial automation device of the one or more industrial automation devices of the industrial automation node;
in the gateway, initiating an event process in the industrial automation node as indicated by the event indication and receiving event data generated by the event process; and
in the gateway, transferring the event indication and the event data to the cloud automation facility for event monitoring.

14. The industrial automation method of claim 13, further comprising the gateway transferring black box data of the at least one industrial automation device to the cloud automation facility.
